# EUROPEAN PATENT APPLICATION

(11) **EP 4 787 512 A1**
(43) Date of publication of application: **05.08.2026**
(21) Application number: 24870055.1
(22) Date of filing: 25.07.2024
(51) Int. Cl.: H01M 10/04, H01M 50/538, H01M 50/533, H01M 50/584

(54) **BATTERY CELL, CYLINDRICAL BATTERY AND ELECTRICAL DEVICE**

(30) Priority: 28.09.2023 CN 202322684707 U
(71) Applicant: BYD Company Limited, Shenzhen, Guangdong 518118 (CN)
(72) Inventor: YAO, Lyuhua, Shenzhen, Guangdong 518118 (CN); WANG, Jianjun, Shenzhen, Guangdong 518118 (CN); LEI, Lei, Shenzhen, Guangdong 518118 (CN)
(74) Representative: Mathys & Squire
(86) International application number: PCT/CN2024/107645
(87) International publication number: WO 2025/066501

(57) **Abstract**

A battery cell (100), a cylindrical battery, and an electrical device are provided. The battery cell (100) includes a wound battery cell body (10). The wound battery cell body (10) includes a first electrode plate (11), a second electrode plate (13), and a separator that are wound. The electrode plate includes an electrode plate body (20) and an active substance layer (25). The electrode plate body (20) includes a coating region (23) and a bare foil region (24) connected to a side of the coating region (23) in a winding axial direction. The active substance layer (25) is covered on the coating region (23). At least a part of the bare foil region (24) is suitable for being bent into a tab portion (40), and the tab portion (40) includes a plurality of first tab groups (32) spaced apart in a winding circumferential direction.

## Description

### CROSS-REFERENCE TO RELATED APPLICATIONS

This application is based on Chinese Patent Application No. 202322684707.6, filed on September 28, 2023, and claims priority to this Chinese Patent Application, which is incorporated herein by reference in its entirety.

### TECHNICAL FIELD

This application relates to the field of battery technologies, and in particular, to a battery cell, a cylindrical battery, and an electrical device.

### BACKGROUND

In related technologies, in a process of preparing a cylindrical battery that uses a fulltab battery cell, after electrode plates are stacked and wound, tabs easily generate metal shavings due to collision and compression in a bending and flattening process, which readily causes a short-circuit risk.

### SUMMARY

This application is intended to resolve at least one of technical problems in the conventional technology. Therefore, an objective of this application is to provide a battery cell. In a process in which a tab portion is provided as a plurality of first tab groups spaced apart in a winding circumferential direction and at least a part of a bare foil region is bent and flattened into the tab portion, because two adjacent first tab groups are spaced apart, metal shavings can be prevented from being generated due to collision and compression between the two adjacent first tab groups, thereby reducing a short-circuit risk in the process of bending and flattening to form the tab portion.

This application provides a cylindrical battery with the foregoing battery cell.

This application further provides an electrical device with the foregoing cylindrical battery.

According to a first aspect of this application, an embodiment provides a battery cell, applied to a cylindrical battery. The battery cell includes a wound battery cell body, including a first electrode plate, a second electrode plate, and a separator that are wound, wherein polarity of the first electrode plate is opposite to polarity of the second electrode plate, the separator is provided between the first electrode plate and the second electrode plate, the first electrode plate and/or the second electrode plate includes an electrode plate body and an active substance layer, the electrode plate body includes a coating region and a bare foil region connected to a side of the coating region in a winding axial direction, the active substance layer is covered on the coating region, at least a part of the bare foil region is suitable for being bent into a tab portion, and the tab portion includes a plurality of first tab groups spaced apart in a winding circumferential direction.

In the battery cell according to this embodiment of this application, in a process in which the tab portion is provided as a plurality of first tab groups spaced apart in the winding circumferential direction and at least a part of the bare foil region is bent and flattened into the tab portion, because two adjacent first tab groups are spaced apart, metal shavings can be prevented from being generated due to collision and compression between the two adjacent first tab groups, thereby reducing a short-circuit risk in the process of bending and flattening to form the tab portion.

According to some embodiments of this application, an outer contour of an orthographic projection of the first tab group in the winding axial direction is in a fan shape.

According to some embodiments of this application, there are 5 to 16 first tab groups

According to some embodiments of this application, a spacing between adjacent first tab groups ranges from 0.5 mm to 8 mm.

According to some embodiments of this application, a circumferential size of the first tab group is greater than a circumferential spacing between adjacent first tab groups on a same winding turn.

According to some embodiments of this application, a spacing groove is formed between adjacent first tab groups.

According to some optional embodiments of this application, in the winding axial direction, two opposite edges of the spacing groove in a circumferential direction of the wound battery cell body are respectively a first edge and a second edge, and an extension line of the first edge and an extension line of the second edge are provided in parallel or at an angle.

According to some embodiments of this application, two opposite edges of the first tab group in the winding circumferential direction are respectively a third edge and a fourth edge, an extension line of the third edge and an extension line of the fourth edge are provided at an angle, and the angle ranges from 22.5° to 80°.

According to some embodiments of this application, the tab portion includes a plurality of second tab groups spaced apart in the winding circumferential direction, the second tab groups and the first tab groups are alternately arranged in the winding circumferential direction, and a bending gap is formed between adjacent second tab group and first tab group.

According to some optional embodiments of this application, a circumferential size of the second tab group is greater than a circumferential size of the bending gap on the same winding turn.

According to some optional embodiments of this application, on the same winding turn, two opposite edges of the second tab group in the winding circumferential direction of the battery cell are respectively a fifth edge and a sixth edge, and an extension line of the fifth edge and an extension line of the sixth edge are provided in parallel or at an angle.

According to some optional embodiments of this application, at least one end of the first tab group in the winding circumferential direction is provided on a side of an adjacent second tab group that is away from the coating region.

According to some embodiments of this application, the bare foil region includes a buffer region and a tab region, the buffer region is connected between the tab region and the coating region, there is a bending line between the buffer region and the tab region, and the tab region is suitable for being bent along the bending line to form the tab portion.

According to some embodiments of this application, a height of the bare foil region ranges from 3 mm to 10 mm in the winding axial direction.

According to some embodiments of this application, a part of the bare foil region that is close to a winding axis is formed with a clearance notch, the clearance notch forms a tab-free region, and at least a part of the bare foil region is bent toward the winding axis to form the tab portion.

According to some embodiments of this application, the battery cell further includes a current collector plate, the current collector plate is provided on a side of the tab portion that is away from the coating region, and the current collector plate is electrically connected to the first tab groups.

According to some optional embodiments of this application, the current collector plate includes a tab connection portion and a flexible buffer portion, the tab connection portion is electrically connected to the first tab groups, and the flexible buffer portion is capable of deforming in the winding axial direction.

According to some optional embodiments of this application, a clearance opening is formed on the current collector plate, and at least a part of the flexible buffer portion is opposite to the clearance opening in the winding axial direction.

According to some optional embodiments of this application, the flexible buffer portion includes an intermediate spring sheet and a plurality of elastic connection sheets spaced apart in a circumferential direction of the current collector plate, the intermediate spring sheet is located in a middle of the current collector plate, one end of the elastic connection sheet is connected to the intermediate spring sheet, the other end of the elastic connection sheet extends in a direction away from a center of the current collector plate and is connected to the tab connection portion, and the elastic connection sheets and the intermediate spring sheet are all opposite to the clearance opening in the winding axial direction.

According to some optional embodiments of this application, a width of the elastic connection sheet ranges from 4 mm to 10 mm in the circumferential direction of the current collector plate.

According to some optional embodiments of this application, the clearance opening includes an intermediate opening region and a plurality of branch opening regions in communication with the intermediate opening region, and the plurality of branch opening regions are located on a peripheral side of the intermediate opening region and are spaced apart in the circumferential direction of the current collector plate; and in the winding axial direction, the intermediate spring sheet is opposite to the intermediate opening region, the elastic connection sheets are opposite to the branch opening regions, the tab connection portion includes a plurality of tab connection sub-portions spaced apart in the circumferential direction of the current collector plate, and the branch opening region is located between adjacent tab connection sub-portions.

According to some optional embodiments of this application, a spacing between a radial outer edge of the branch opening region and an outer edge of the current collector plate ranges from 3 mm to 12 mm.

According to some optional embodiments of this application, at least a part of the branch opening region is opposite to a region between two adjacent first tab groups in the winding axial direction.

According to a second aspect of this application, an embodiment provides a cylindrical battery, including the battery cell according to the embodiment in the first aspect of this application.

In the cylindrical battery according to this embodiment of this application, the battery cell is provided, so that in a process of forming the tab portion through bending and flattening, metal shavings can be prevented from being generated due to collision and compression, thereby reducing a short-circuit risk in the process of bending and flattening to form the tab portion.

According to a third aspect of this application, an embodiment provides an electrical device, including the cylindrical battery according to the embodiment in the second aspect of this application.

In the electrical device according to this embodiment of this application, the cylindrical battery is provided, so that in a process of preparing the cylindrical battery and in a process of forming the tab portion through bending and flattening, metal shavings can be prevented from being generated due to collision and compression, thereby reducing a short-circuit risk in the process of bending and flattening to form the tab portion.

Some of additional aspects and advantages of this application are provided in the following descriptions, and some of the additional aspects and the advantages become apparent from the following descriptions or are learned from practice of this application.

### BRIEF DESCRIPTION OF DRAWINGS

The foregoing and/or additional aspects and advantages of this application will be clear and easily understood from the description of the embodiments taken in conjunction with the following drawings.
FIG. 1 is a schematic expanded view of an electrode plate of a battery cell according to some embodiments of this application;
FIG. 2 is a schematic diagram of a wound battery cell body of a battery cell according to some embodiments of this application;
FIG. 3 is a schematic diagram 1 of a processing process of the wound battery cell body of the battery cell in FIG. 2, and shows that a plurality of spacing grooves are formed at a position of a tab cluster;
FIG. 4 is a schematic diagram of a wound battery cell body of a battery cell according to some other embodiments of this application;
FIG. 5 is a schematic diagram 1 of a processing process of the wound battery cell body of the battery cell in FIG. 4, and shows that two bending gaps are formed at a position of a tab cluster through cutting by using a cutting fixture;
FIG. 6 is a schematic diagram 2 of a processing process of the wound battery cell body of the battery cell in FIG. 4, and shows that a plurality of bending gaps are formed at a position of a tab cluster through cutting;
FIG. 7 is a schematic diagram 3 of a processing process of the wound battery cell body of the battery cell in FIG. 6, and shows that second tab groups are bent and flattened in a direction close to a central hole;
FIG. 8 is a schematic diagram of assembling the wound battery cell body of the battery cell in FIG. 7 with a current collector plate; and
FIG. 9 is a partially enlarged view of a part A in FIG. 8.

### Reference numerals:

100. battery cell;
10. wound battery cell body; 11. first electrode plate; 12. central hole; 13. second electrode plate;
20. electrode plate body; 21. winding-start end; 22. winding-finish end; 23. coating region; 24. bare foil region; 25. active substance layer;
30. tab region; 31. tab cluster; 301. first to-be-bent tab region; 302. second to-be-bent tab region; 32. first tab group; 33. spacing groove; 34. second tab group; 35. bending gap; 36. buffer region; 37. bending line; 38. clearance notch; 39. tab-free region; 40. tab portion;
50; current collector plate; 51. tab connection portion; 511. tab connection sub-portion; 52. clearance opening; 521. intermediate opening region; 522. branch opening region; 53. flexible buffer portion; 531. intermediate spring sheet; 532. elastic connection sheet; and
60. cutting fixture.

### DESCRIPTION OF EMBODIMENTS

The following describes in detail embodiments of this application, examples of the embodiments are shown in the accompanying drawings. Same or similar reference numerals throughout the accompanying drawings indicate same or similar elements or elements having same or similar functions. The following embodiments described with reference to the accompanying drawings are exemplary and are merely intended to explain this application, but will not be understood as a limitation on this application.

The following describes a battery cell 100 according to an embodiment of this application with reference to the accompanying drawings.

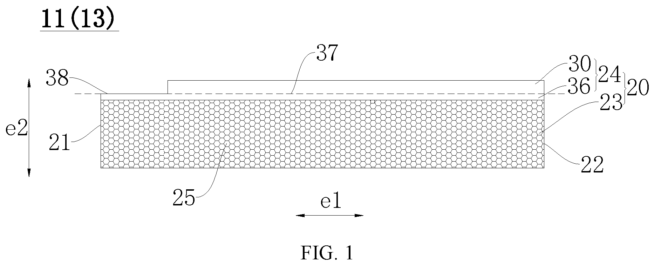

Referring to FIG. 1 to FIG. 9, according to a first aspect of this application, an embodiment provides a battery cell 100. The battery cell 100 is applied to a cylindrical battery. The battery cell 100 includes a wound battery cell body 10, including a first electrode plate 11, a second electrode plate 13, and a separator that are wound. Polarity of the first electrode plate 11 is opposite to polarity of the second electrode plate 13. The separator is disposed between the first electrode plate 11 and the second electrode plate 13. The first electrode plate 11 and/or the second electrode plate 13 includes an electrode plate body 20 and an active substance layer 25. For example, the first electrode plate 11 includes an electrode plate body 20 and an active substance layer 25; the second electrode plate 13 includes an electrode plate body 20 and an active substance layer 25; or the first electrode plate 11 includes an electrode plate body 20 and an active substance layer 25 and the second electrode plate 13 includes an electrode plate body 20 and an active substance layer 25.

In a process of preparing the battery cell 100 of the cylindrical battery, the first electrode plate 11, the separator, and the second electrode plate 13 are stacked, wherein one of the first electrode plate 11 and the second electrode plate is a positive electrode and the other is a negative electrode; and the separator is sandwiched between adjacent first electrode plate 11 and second electrode plate 13, two ends of the first electrode plate 11 and the second electrode plate 13 in an unwound direction (referring to a direction e1 in FIG. 1) are respectively a winding-start end 21 and a winding-finish end 22, and a winding mandrel is provided at the winding-start end 21 of the first electrode plate 11 and the second electrode plate 13, and starts winding from the winding-start end 21 until reaches the winding-finish end 22 of the first electrode plate 11 and the second electrode plate 13. The cylindrical wound battery cell body 10 is formed after winding, and a winding mandrel hole is formed at a center of the battery cell 100. The winding mandrel is located in the winding mandrel hole, and a central hole 12 of the battery cell 100 is formed by the winding mandrel hole after the winding mandrel is withdrawn. A gas generated by the cylindrical battery in a chemical reaction may be vented from the central hole 12 of the battery cell 100. In addition, in a process of performing an electrolyte injection operation on the cylindrical battery, electrolyte may enter the battery cell 100 through the central hole 12 of the battery cell 100.

The electrode plate body 20 includes a coating region 23 and a bare foil region 24 connected to a side of the coating region 23 in a winding axial direction, and the active substance layer 25 is covered on the coating region 23. The coating region 23 and the bare foil region 24 are arranged in a width direction (referring to a direction e2 in FIG. 1) of the electrode plate body 20. The width direction of the electrode plate body 20 is parallel to the winding axial direction, a central axis direction of the wound battery cell body 10 is consistent with the winding axial direction, and the width direction of the electrode plate body 20 is perpendicular to an unwound direction of the electrode plate body 20. The bare foil region 24 serves as a part of the electrode plate body 20. Therefore, there is no need to separately prepare a tab region, and there is no need to connect the separately prepared tab region to the coating region 23 of the electrode plate body 20, for example, there is no need to separately prepare the tab region and connect the tab region to the coating region 23 of the electrode plate body 20 through welding. Such an arrangement can reduce difficulty in processing the electrode plate body 20, and simplify a production process, thereby improving production efficiency to some extent.

At least a part of the bare foil region 24 is suitable for being bent into a tab portion 40. For example, a part of the bare foil region 24 forms a tab region 30 or the entire bare foil region 24 forms a tab region 30, and the tab region is suitable for being bent into a tab portion 40. The tab portion 40 includes a plurality of first tab groups 32 spaced apart in a winding circumferential direction. The winding circumferential direction and the winding axial direction are perpendicular to each other.

It will be noted that "a plurality of" in this application refers to two or more.

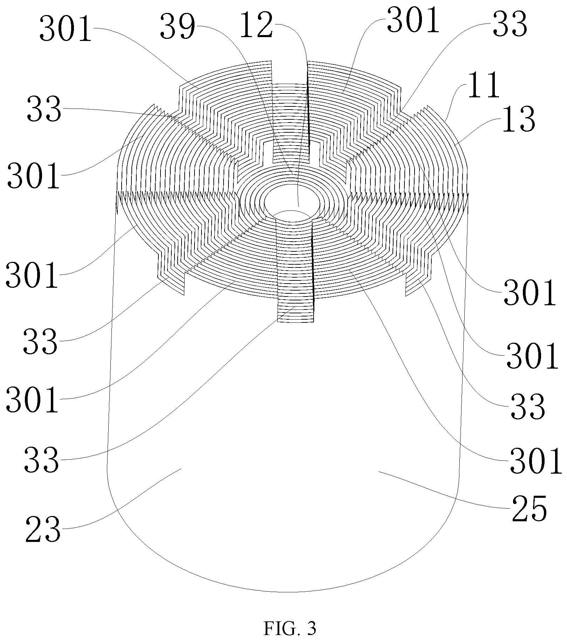

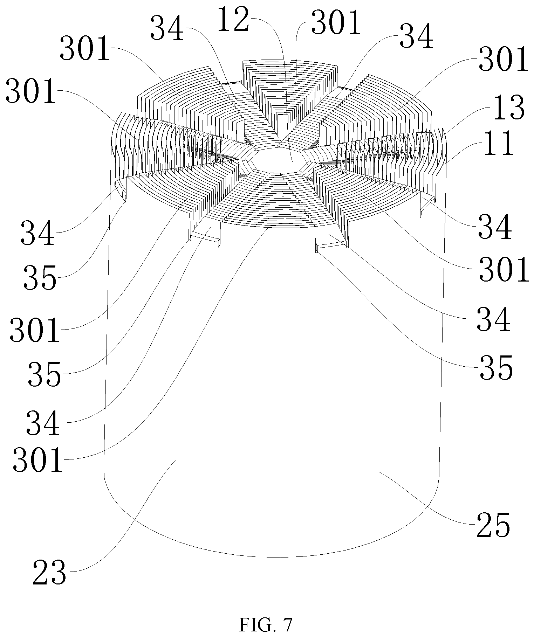

For example, referring to FIG. 3 and FIG. 7, the tab portion 40 includes eight first tab groups 32 spaced apart in the winding circumferential direction.

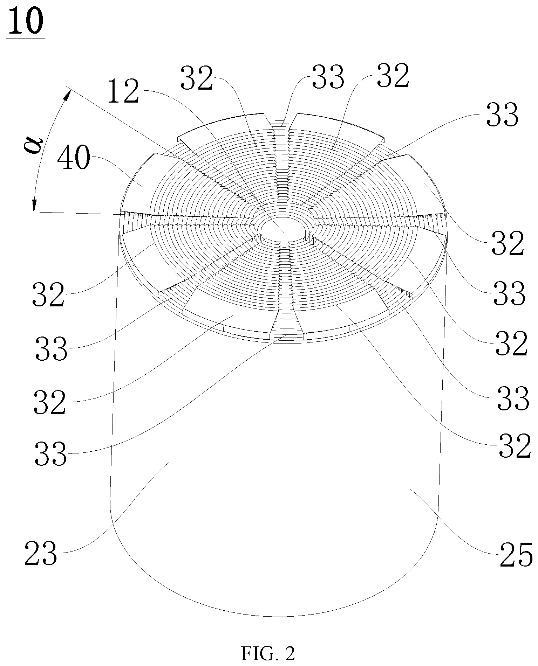

In a process of forming the tab portion 40, after the first electrode plate 11, the separator, and the second electrode plate 13 are wound, a tab region 30 located on the same side of the winding axial direction (referring to a direction e3 in FIG. 2) forms a tab cluster 31. The tab cluster 31 may be a positive tab cluster or a negative tab cluster. The tab cluster 31 is divided into a plurality of regions spaced apart in the winding circumferential direction, and the plurality of regions of the tab cluster 31 are bent and flattened to form the plurality of first tab groups 32. Before the tab cluster 31 is bent and flattened to form the tab portion 40, because the tab cluster 31 is divided into the plurality of regions spaced apart in the winding circumferential direction, in a process of bending and flattening the plurality of regions of the tab cluster 31 to form the plurality of first tab groups 32, because two adjacent first tab groups 32 are spaced apart, metal shavings can be prevented from being generated due to collision and compression between the two adjacent first tab groups 32, thereby reducing a short-circuit risk in the process of bending and flattening to form the tab portion 40.

In the bending and flattening process, the first tab groups 32 are gradually flattened from a bent state under the action of pressure. The plurality of first tab groups 32 are spaced apart, so that there is a spacing between adjacent first tab groups 32, thereby preventing a first tab group 32 from interfering with an adjacent first tab group 32 in the bending and flattening process, and ensuring surface flatness of the first tab groups 32.

In the battery cell 100 provided in this embodiment of this application, in a process in which the tab portion 40 is provided as a plurality of first tab groups 32 spaced apart in the winding circumferential direction and at least a part of the bare foil region 24 is bent and flattened into the tab portion 40, because the two adjacent first tab groups 32 are spaced apart, metal shavings can be prevented from being generated due to collision and compression between the two adjacent first tab groups 32, thereby reducing a short-circuit risk in the process of bending and flattening to form the tab portion 40.

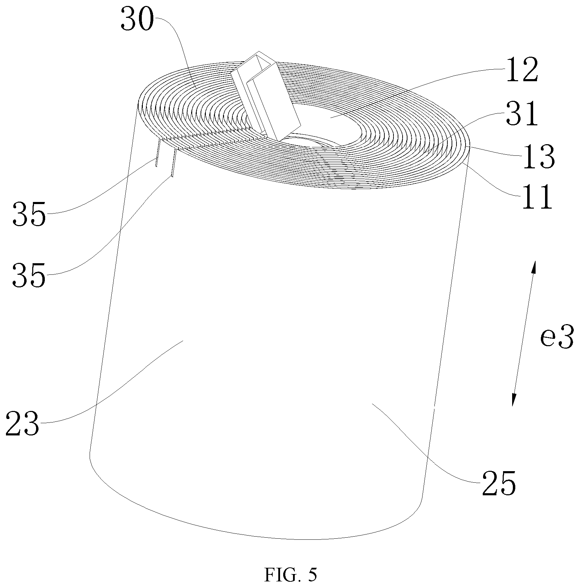

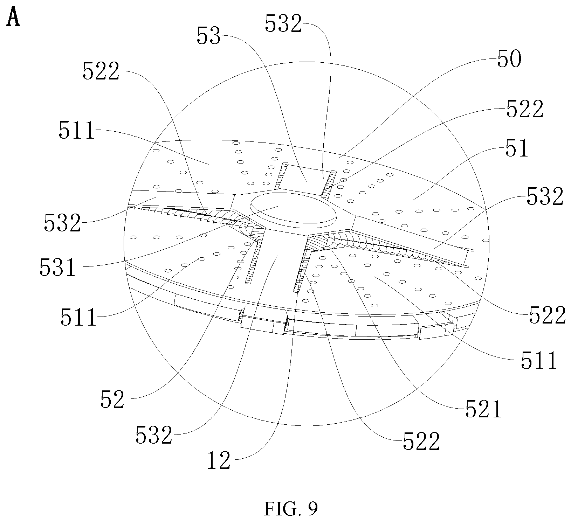

According to some embodiments of this application, referring to FIG. 5 and FIG. 9, an outer contour of an orthographic projection of the first tab group 32 in the winding axial direction is in a fan shape. Because the outer contour of the orthographic projection of the first tab group 32 in the winding axial direction is in the fan shape, the first tab group 32 has a large area, so that the tab portion 40 has a high current flowing capability, thereby improving charging/discharging performance of the cylindrical battery.

In addition, the first tab group 32 with a large area can facilitate processing and assembly of the tab region 30. For example, when a welding operation is performed on the tab region 30, the first tab group 32 has a large area, thereby providing a large welding region and operation space, and facilitating the welding operation.

Referring to FIG. 3 and FIG. 6 to FIG. 7, according to some embodiments of this application, there are 5 to 16 first tab groups 32. For example, there may be 5, 8, 11, 14, or 16 first tab groups 32. If a quantity of first tab groups 32 is less than 5, the quantity of first tab groups 32 is excessively small, and a region for bending and flattening a single first tab group 32 is large. A large processing region is not conducive to ensuring surface flatness of the single first tab group 32. If a quantity of first tab groups 32 is greater than 16, the quantity of first tab groups 32 that need to be processed is excessively large, resulting in an increase in processing and preparation difficulty. In addition, the current flowing capability of the tab portion 40 is affected to some extent due to a large quantity of processing regions. The quantity of first tab groups 32 is set to 5 to 16, to ensure that surfaces of the plurality of first tab groups 32 are flat, thereby facilitating subsequent processing and assembly of the tab portion 40. In addition, the current flowing capability of the tab portion 40 can be ensured, thereby ensuring charging/discharging performance of the cylindrical battery.

Optionally, the plurality of first tab groups 32 may be uniformly distributed at equal angles to facilitate processing and preparation of the first tab groups 32.

For example, referring to FIG. 3 and FIG. 7, there are eight first tab groups 32, and the eight first tab groups 32 are uniformly distributed at equal angles.

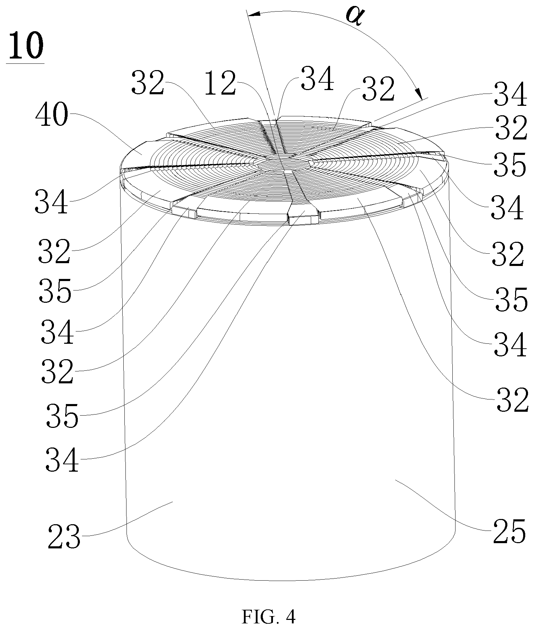

Referring to FIG. 2 and FIG. 4, according to some embodiments of this application, two opposite edges of the first tab group 32 in the winding circumferential direction are respectively a third edge and a fourth edge, an extension line of the third edge and an extension line of fourth edge are provided at an angle, the angle between the extension line of the third edge and the extension line of the fourth edge is α, and the angle α between the extension line of the third edge and the extension line of the fourth edge ranges from 22.5° to 80°.

The angle α ranges from 22.5° to 80°, for example, the angle α may be 22.5°, 30°, 40°, 50°, 60°, 70°, or 80°. If the angle α is less than 22.5°, the angle α is small, and an area of the first tab group 32 is small, but the quantity of first tab groups 32 that need to be processed is large, resulting in an increase in processing and preparation difficulty. In addition, the current flowing capability of the tab portion 40 is affected to some extent due to a large quantity of processing regions. If the angle α is greater than 72°, the angle α is large, a region for bending and flattening the first tab group 32 is large, and a large processing region is not conducive to ensuring surface flatness of a single first tab group 32. The angle α is set to 22.5° to 72°, to ensure that surfaces of the plurality of first tab groups 32 are flat, thereby facilitating subsequent processing and assembly of the tab portion 40. In addition, the current flowing capability of the tab portion 40 can be ensured, thereby ensuring charging/discharging performance of the cylindrical battery.

Optionally, if the plurality of first tab groups 32 are uniformly distributed at equal angles, angles of the first tab groups 32 are determined by the quantity of first tab groups 32.

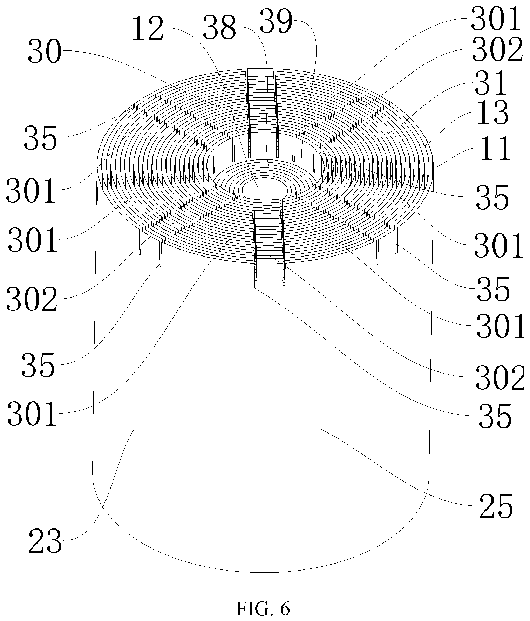

Referring to FIG. 3 and FIG. 6, according to some embodiments of this application, a spacing between adjacent first tab groups 32 ranges from 0.5 mm to 8 mm. For example, the spacing between the adjacent first tab groups 32 may be 0.5 mm, 2 mm, 4 mm, 6 mm, or 8 mm. In the bending and flattening process, the first tab groups 32 are gradually flattened from the bent state under the action of pressure, and the adjacent first tab groups 32 are prone to collision and compression during flattening.

If the spacing between the adjacent first tab groups 32 is less than 0.5 mm, the spacing between the adjacent first tab groups 32 is excessively small. In this case, the two adjacent first tab groups 32 interfere with each other in the bending and flattening process, which affects surface flatness of the tab portion 40 and is not conducive to subsequent processing and assembly. If the spacing between the adjacent first tab groups 32 is greater than 8 mm, the spacing between the adjacent first tab groups 32 is excessively large. In this case, the area of the first tab group 32 is small, which affects the current flowing capability of the tab portion 40. The spacing between the first tab groups 32 is set to 0.5 mm to 8 mm, to ensure surface flatness of the tab portion 40, thereby facilitating subsequent processing and assembly, ensuring the current flowing capability of the tab portion 40, and ensuring charging/discharging performance of the cylindrical battery.

Referring to FIG. 3 and FIG. 6, according to some embodiments of this application, a circumferential size of the first tab group 32 is greater than a circumferential spacing between adjacent first tab groups 32 on the same winding turn. Because the circumferential size of the first tab group 32 is greater than the circumferential spacing between the adjacent first tab groups 32, the area of the first tab group 32 can be greater than an area of a spacing region between the adjacent first tab groups 32, so that the first tab group 32 has a large area, thereby enabling the tab portion 40 to have a high current flowing capability.

Referring to FIG. 3, according to some embodiments of this application, a spacing groove 33 is formed between adjacent first tab groups 32. In the bending and flattening process, the first tab groups 32 are gradually flattened from the bent state under the action of pressure, and the adjacent first tab groups 32 are prone to collision and compression during flattening. The spacing groove 33 is provided between two adjacent first tab groups 32, so that there is a specific spacing between the two adjacent first tab groups 32, thereby preventing the two adjacent first tab groups 32 from interfering with each other in the bending and flattening process, ensuring surface flatness of the tab portion 40, and facilitating subsequent processing and assembly. In addition, it can be ensured that the tab portion 40 has a high current flowing capability.

A quantity of spacing grooves 33 is equal to the quantity of first tab groups 32.

For example, referring to FIG. 3, there are eight first tab groups 32, and there are eight spacing grooves 33 between two adjacent first tab groups 32.

Optionally, the spacing groove 33 may be formed through mechanical cutting by using a cutting fixture 60, through laser die-cutting, through ultrasonic vibration, or the like.

According to some embodiments of this application, the wound battery cell body 10 includes a first electrode plate 11, a second electrode plate 13, and a separator that are wound. The first electrode plate 11 and/or the second electrode plate 13 includes an electrode plate body 20. The electrode plate body 20 includes a coating region 23 and a bare foil region 24 connected to a side of the coating region 23. The bare foil region 24 includes a tab region 30. The tab region 30 is bent into a tab portion 40. The tab portion 40 includes a plurality of first tab groups 32 spaced apart in a winding circumferential direction. A spacing groove 33 is formed between two adjacent first tab groups 32.

In this embodiment, a process of processing and preparing the tab portion 40 is as follows:

First, after winding of a plurality of first electrode plates 11, a plurality of second electrode plates 13, and separators that are stacked is completed, a plurality of spacing grooves 33 are processed at a tab cluster 31 (referring to FIG. 3). The spacing groove 33 is laser die-cut. A plurality of spacing grooves 33 that are uniformly distributed in the winding circumferential direction and that have the same shape are die-cut in a radial direction of the tab cluster 31 at equal angles.

A region between two spacing grooves 33 is a first to-be-bent tab region.

Then, the first to-be-bent tab region is bent and flattened by using a bending fixture (referring to FIG. 2). A quantity of bending fixtures is equal to the quantity of first tab groups 32 and the bending fixtures are in a one-to-one correspondence with the first tab groups 32. A plurality of bending fixtures simultaneously bend and flatten the first to-be-bent tab regions 301 corresponding thereto in a direction close to a winding axis (that is, toward the central hole 12 of the wound battery cell body 10), and the plurality of first to-be-bent tab regions 301 form the plurality of first tab groups 32 after bending and flattening.

In a process in which the bending fixtures bend and flatten the first tab groups 32, the first tab groups 32 are gradually flattened from the bent state under the action of pressure of the bending fixtures. Because there is a spacing groove 33 between two adjacent first tab groups 32, there is a specific spacing between the two adjacent first tab groups 32, thereby preventing a first tab group 32 from interfering with an adjacent first tab group 32 during flattening.

The spacing grooves 33 are cut, and the first tab groups 32 are bent and flattened by using the bending fixtures, so that the tab portion 40 can have a uniform and flat surface, thereby preventing metal shavings from being generated due to collision and compression in the tab region 30 caused by irregular flattening, implementing higher process stability, and enabling the tab portion 40 to have a high current flowing capability.

Referring to FIG. 3, according to some embodiments of this application, in the winding axial direction, two opposite edges of the spacing groove 33 in a circumferential direction of the wound battery cell body 10 are respectively a first edge and a second edge, and an extension line of the first edge and an extension line of the second edge are provided in parallel or at an angle. In this way, a shape of the spacing groove 33 is simple, thereby facilitating processing and preparation of the spacing groove 33.

Further, on the same winding turn, a circumferential size of the first tab group 32 is greater than a circumferential size of the spacing groove 33, to ensure that an area of the first tab group 32 is greater than an area of the spacing groove 33 between adjacent first tab groups 32, so that the first tab group 32 has a large area, thereby ensuring the current flowing capability of the tab portion 40, and improving charging/discharging performance of the cylindrical battery.

Referring to FIG. 6, according to some embodiments of this application, the tab portion 40 includes a plurality of second tab groups 34 spaced apart in the winding circumferential direction, the second tab groups 34 and the first tab groups 32 are alternately arranged in the winding circumferential direction, and a bending gap 35 is formed between adjacent second tab group 34 and first tab group 32. In a bending and flattening process, the second tab groups 34 are gradually flattened from a bent state under the action of pressure, and adjacent first tab group 32 and second tab group 34 are prone to collision and compression during flattening. The bending gap 35 is provided between the adjacent first tab group 32 and second tab group 34, to prevent the adjacent first tab group 32 and second tab group 34 from interfering with each other in the bending and flattening process, thereby ensuring surface flatness of the first tab group 32 and the second tab group 34, and facilitating subsequent processing and preparation.

A quantity of bending gaps 35 is twice a quantity of second tab groups 34.

Optionally, the bending gap 35 may be formed through mechanical cutting by using a cutting fixture 60, through laser die-cutting, through ultrasonic vibration, or the like.

For example, referring to FIG. 5 to FIG. 6, there are eight second tab groups 34 spaced apart in the circumferential direction of the wound battery cell body 10, and there are 16 bending gaps 35 formed through mechanical cutting by using the cutting fixture 60.

Referring to FIG. 5 to FIG. 6, according to some embodiments of this application, on the same winding turn, a circumferential size of the second tab group 34 is greater than a circumferential size of the bending gap 35, so that an area of the second tab group 34 can be greater than an area of the bending gap 35, and the bending gap 35 can have a small area, thereby ensuring that the second tab group 34 has a large area, and ensuring the current flowing capability of the tab portion 40.

Referring to FIG. 5 to FIG. 6, according to some embodiments of this application, on the same winding turn, two opposite edges of the second tab group 34 in the winding circumferential direction of the battery cell are respectively a fifth edge and a sixth edge, and an extension line of the fifth edge and an extension line of the sixth edge are provided in parallel or at an angle. In this way, a shape of the second tab group 34 is simple, thereby facilitating processing and preparation of the second tab group 34.

Further, on the same winding turn, the circumferential size of the first tab group 32 is greater than the circumferential size of the second tab group 34, to ensure that the area of the first tab group 32 is greater than the area of the second tab group 34, and the first tab group 32 can have a large area, thereby improving the current flowing capability of the tab portion 40, and improving charging/discharging performance of the cylindrical battery.

Referring to FIG. 4, according to some embodiments of this application, at least one end of the first tab group 32 in the winding circumferential direction is provided on a side of an adjacent second tab group 34 that is away from the coating region 23. That is, one end of the first tab group 32 in the winding circumferential direction is provided on the side of the adjacent second tab group 34 that is away from the coating region 23, or two ends of the first tab group 32 in the winding circumferential direction are respectively provided on sides that are of two second tab groups 34 adjacent thereto and that are away from the coating region 23.

Because at least one end of the first tab group 32 in the winding circumferential direction is provided on the side of the adjacent second tab group 34 that is away from the coating region 23, the tab portion 40 has an appropriate structure, which can avoid compression and collision between the first tab group 32 and the second tab group 34, thereby ensuring surface flatness of the first tab group 32 and the second tab group 34, and facilitating processing and assembly of the tab portion 40. In addition, because the at least one end of the first tab group 32 in the winding circumferential direction is provided on the side of the adjacent second tab group 34 that is away from the coating region 23, the area of the bending gap 35 can be greatly reduced, so that the first tab group 32 and the second tab group 34 have large areas, thereby enabling the tab portion 40 to have a high current flowing capability.

In addition, because the at least one end of the first tab group 32 in the winding circumferential direction is provided on the side of the adjacent second tab group 34 that is away from the coating region 23, there is a height difference between the first tab group 32 and the second tab group 34, thereby facilitating subsequent processing and preparation of the cylindrical battery.

For example, when an electrolyte injection operation is performed on the cylindrical battery, the electrolyte may enter the battery cell 100 through a gap between the first electrode plate 11 and the second electrode plate 13 and wet the coating region 23 of the electrode plate body 20. There is the height difference between the first tab group 32 and the second tab group 34, so that there is a gap between the current collector plate 50 connected to the first tab group 32 and the second tab group 34. The electrolyte may enter the gap between the first electrode plate 11 and the second electrode plate 13 through a gap between the current collector plate 50 and the second tab group 34, to wet the coating region 23 of the electrode plate body 20, which can avoid a case in which the current collector plate 50 is tightly attached to the tab portion 40, making it difficult for the electrolyte to enter the battery cell 100 through the gap between the first electrode plate 11 and the second electrode plate 13, thereby facilitating entry of the electrolyte after electrolyte injection, improving a wetting effect of the battery cell 100, shortening an electrolyte injection time of the battery cell 100, and improving electrolyte injection efficiency.

According to some embodiments of this application, the wound battery cell body 10 includes a first electrode plate 11, a second electrode plate 13, and a separator that are wound. The first electrode plate 11 and/or the second electrode plate 13 includes an electrode plate body 20. The electrode plate body 20 includes a coating region 23 and a bare foil region 24 connected to a side of the coating region 23. The bare foil region 24 includes a tab region 30. The tab region 30 is bent into a tab portion 40. The tab portion 40 includes first tab groups 32 spaced apart in a winding circumferential direction and second tab groups 34 spaced apart in the winding circumferential direction, and a bending gap 35 is formed between adjacent first tab group 32 and second tab group 34.

A bending and flattening operation for the tab cluster 31 is as follows:

First, after winding of the first electrode plate 11, the second electrode plate 13, and the separator is completed, a plurality of bending gaps 35 are processed on the tab cluster 31 (referring to FIG. 6). The bending gap 35 is formed through cutting by using a cutting fixture 60. The cutting fixture 60 cuts the tab cluster 31 in a radial direction of the tab cluster 31. After cutting, two bending gaps 35 spaced apart in the winding circumferential direction are formed (referring to FIG. 5), and the tab cluster 31 is cut at equal angles for a plurality of times to form a plurality of bending gaps 35.

After the bending gaps 35 are cut, first to-be-bent tab regions 301 and second to-be-bent tab regions 302 that are alternately arranged are formed in the winding circumferential direction.

Then, the second to-be-bent tab region 302 is bent and flattened by using a second bending fixture (referring to FIG. 7), to form the second tab group 34. A quantity of second bending fixtures is the same as a quantity of second tab groups 34 and the second bending fixtures are in a one-to-one correspondence with the second tab groups 34. A plurality of second bending fixtures simultaneously bend and flatten a plurality of second to-be-bent tab regions 302 corresponding thereto in a direction close to a winding axis, and a plurality of second tab groups 34 are formed after the plurality of second to-be-bent tab regions 302 are bent and flattened.

In a process in which the second bending fixture bends and flattens the second tab group 34, the second tab group 34 is gradually flattened from a bent state under the action of pressure of the second bending fixture. There is a bending gap 35 between the adjacent first tab group 32 and second tab group 34, so that there is a specific spacing between the first tab group 32 and the second tab group 34, thereby preventing the second tab group 34 from interfering with the adjacent first tab group 32 during flattening.

Finally, the first to-be-bent tab region 301 is bent and flattened by using a first bending fixture (referring to FIG. 4), to form the first tab group 32. A quantity of first bending fixtures is the same as a quantity of first tab groups 32 and the first bending fixtures are in a one-to-one correspondence with the first tab groups 32. A plurality of first bending fixtures simultaneously bend and flatten a plurality of first to-be-bent tab regions 301 corresponding thereto in a direction close to a winding axis, and a plurality of first tab groups 32 are formed after the plurality of first to-be-bent tab regions 301 are bent and flattened.

The first to-be-bent tab region 301 is bent and flattened to form the first tab group 32, and the second to-be-bent tab region 302 is bent and flattened to form the second tab group 34. A quantity of first tab groups 32 is the same as a quantity of second tab groups 34 and both are half of a quantity of bending gaps 35 (referring to FIG. 6).

In a process in which the first bending fixture bends and flattens the first tab group 32, the first tab group 32 is gradually flattened from a bent state under the action of pressure of the first bending fixture. The second tab group 34 is already bent and flattened, so that there is no collision and compression between the first tab group 32 and the second tab group 34 in the process in which the first tab group 32 is gradually flattened. In addition, after the first tab group 32 is bent and flattened, two ends of the first tab group 32 in the circumferential direction of the wound battery cell body are respectively pressed on sides that are of two second tab groups 34 adjacent thereto and that are away from the coating region 23.

The second tab group 34 is first bent and flattened, and then the first tab group 32 is bent and flattened, so that the tab portion 40 can have a uniform and flat surface, thereby preventing metal shavings from being generated due to collision and compression in the tab region 30 caused by irregular flattening, implementing higher process stability, and enabling the tab portion 40 to have a high current flowing capability.

Optionally, in the process in which the second to-be-bent tab region 302 is bent and flattened by using the second bending fixture to form the second tab group 34, the second tab group 34 may be directly formed through a single time of bending and flattening, or be formed after a plurality of times of bending and flattening; and in the process in which the first to-be-bent tab region 301 is bent and flattened by using the first bending fixture to form the first tab group 32, the first tab group 32 may be directly formed through a single time of bending and flattening, or be formed after a plurality of times of bending and flattening.

Referring to FIG. 1, according to some embodiments of this application, the bare foil region 24 includes a buffer region 36 and a tab region 30, the buffer region 36 is connected between the tab region 30 and the coating region 23, there is a bending line 37 between the buffer region 36 and the tab region 30, and the tab region 30 is suitable for being bent along the bending line 37 to form the tab portion 40. The buffer region 36 is provided between the coating region 23 and the tab region 30, so that the buffer region 36 can protect the coating region 23, thereby reducing or avoiding occurrence of a case in which the coating region 23 is damaged in a process of processing the tab region 30. In addition, the buffer region 36 is provided to largely ensure the current flowing capability of the cylindrical battery, thereby ensuring charging/discharging performance of the cylindrical battery.

For example, the buffer region 36 is provided, so that there is a specific distance between the coating region 23 and the tab region 30. When a welding operation is performed on the tab region 30, a high temperature generated during welding may be lowered by the buffer region 36, thereby reducing a temperature of the coating region 23, and reducing or avoiding occurrence of a case in which the coating region 23 of the electrode plate body 20 and the separator are damaged due to the high temperature. In addition, the buffer region 36 may slightly deform to ensure flatness of a welding plane of the tab portion 40 in a welding process, thereby ensuring welding quality of the tab portion 40, ensuring the current flowing capability of the tab portion 40, and ensuring charging/discharging performance of the cylindrical battery.

Referring to FIG. 1, according to some embodiments of this application, a height of the bare foil region 24 ranges from 3 mm to 10 mm in the winding axial direction. For example, the height of the bare foil region 24 in the winding axial direction may be 3 mm, 5 mm, 7 mm, 9 mm, or 10 mm. In the winding axial direction, if a size of the bare foil region 24 is less than 3 mm, the bare foil region 24 has a small size in the winding axial direction. In this case, the area of the tab region 30 is excessively small, and the current flowing capability of the tab portion 40 is poor. In the winding axial direction, if a size of the bare foil region 24 is greater than 10 mm, the bare foil region 24 has a large size in the winding axial direction. In this case, the bare foil region 24 occupies a large space, and energy density of the cylindrical battery is low.

The size of the bare foil region 24 in the winding axial direction is set to 3 mm to 10 mm, so that the bare foil region 24 has a proper size in a width direction of the electrode plate body 20, thereby ensuring the current flowing capability of the tab portion 40, and ensuring charging/discharging performance of the cylindrical battery. In addition, the size of the bare foil region 24 in the winding axial direction is set to 3 mm to 10 mm, to ensure that the cylindrical battery has high energy density.

Referring to FIG. 1 to FIG. 7, according to some embodiments of this application, a part of the bare foil region 24 that is close to a winding axis is formed with a clearance notch 38, the clearance notch 38 forms a tab-free region 39, and at least a part (that is, the tab region 30) of the bare foil region 24 is bent in a direction close to the winding axis to form the tab portion 40. In a process of forming the wound battery cell body 10 through winding, the winding mandrel is located in the central hole 12, the clearance notch 38 is provided at a part of the bare foil region 24 that is close to the winding axis, and the clearance notch 38 forms the tab-free region 39, to prevent the tab region 30 from interfering with the central hole 12 after being bent in a direction close to a central axis of the wound battery cell body 10, which affects wetting and venting effects of the central hole 12.

Optionally, the clearance notch 38 may be formed through laser die-cutting.

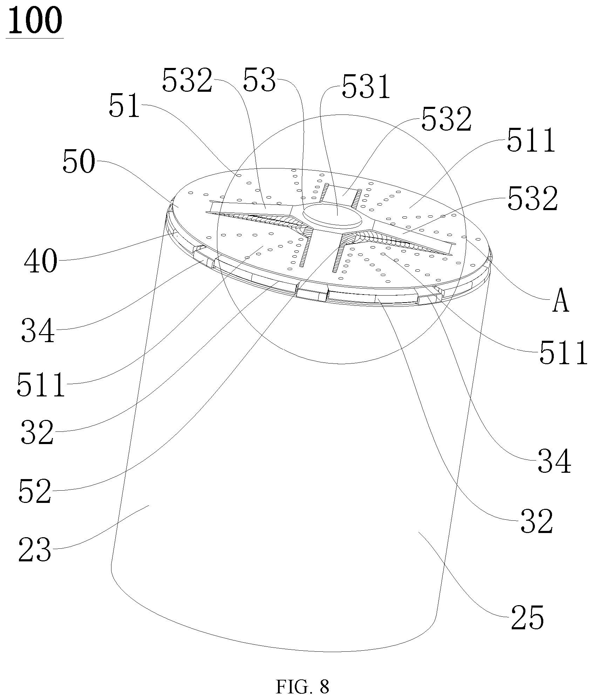

Referring to FIG. 8, according to some embodiments of this application, the battery cell 100 includes a current collector plate 50, the current collector plate 50 is provided on a side of the tab portion 40 that is away from the coating region 23, and the current collector plate 50 is electrically connected to the first tab group 32. The surfaces of the first tab groups 32 are flat, and a plurality of first tab groups 32 have a large area, which can facilitate electrical connection to the current collector plate 50. In addition, the current collector plate 50 is electrically connected to the first tab groups 321 with the large area, to improve the current flowing capability of the tab portion 40, thereby improving charging/discharging performance of the cylindrical battery.

Optionally, the current collector plate 50 may be connected to the first tab groups 32 through welding. The first tab groups 32 have flat surfaces and have a large area, so that an enough operation space can be provided, thereby facilitating a welding operation. In addition, a large welding region can ensure welding quality.

Referring to FIG. 8, according to some embodiments of this application, the current collector plate 50 includes a tab connection portion 51 and a flexible buffer portion 53, the tab connection portion 51 is electrically connected to the first tab groups 32, and the flexible buffer portion 53 is capable of deforming in the winding axial direction.

When the battery cell 100 axially displaces, the first tab groups 32 electrically connected to the current collector plate 50 are prone to stress concentration. The flexible buffer portion 53 is provided, and the flexible buffer portion 53 can deform in the winding axial direction. When the battery cell 100 axially displaces, stress concentration of the first tab groups 32 can be reduced through deformation of the flexible buffer portion 53, thereby implementing buffering, and preventing axial displacement of the battery cell 100 from causing the first tab groups 32 to break under force.

Referring to FIG. 8 to FIG. 9, according to some embodiments of this application, a clearance opening 52 is formed on the current collector plate 50. In the winding axial direction, at least a part of the flexible buffer portion 53 is opposite to the clearance opening 52, that is, a part of the flexible buffer portion 53 may be opposite to the clearance opening 52 or the entire flexible buffer portion 53 may be opposite to the clearance opening 52.

Because the clearance opening 52 is provided on the current collector plate 50 and at least a part of the flexible buffer portion 53 is opposite to the clearance opening 52, the clearance opening 52 can provide a deformation space for deformation of the flexible buffer portion 53 in the winding axial direction, and can prevent the venting and wetting effects of the central hole 12 from being affected by interference between the flexible buffer portion 53 of the current collector plate 50 and the central hole 12. In addition, the clearance opening 52 is provided, so that a gas generated by the cylindrical battery in a chemical reaction can be further vented through the clearance opening 52, thereby improving the venting effect. In addition, in the process of performing the electrolyte injection operation on the cylindrical battery, the electrolyte may enter a gap between the central hole 12 and the first electrode plate 11 through the clearance opening 52, and enter the battery cell 100, thereby facilitating entry of the electrolyte after electrolyte injection, improving the wetting effect of the battery cell 100, shortening the electrolyte injection time of the battery cell 100, and improving electrolyte injection efficiency.

Referring to FIG. 8 to FIG. 9, according to some embodiments of this application, the flexible buffer portion 53 includes an intermediate spring sheet 531 and a plurality of elastic connection sheets 532 spaced apart in a circumferential direction of the current collector plate 50, the intermediate spring sheet 531 is located in a middle of the current collector plate 50, one end of the elastic connection sheet 532 is connected to the intermediate spring sheet 531, the other end of the elastic connection sheet 532 extends in a direction away from a center of the current collector plate 50 and is connected to the tab connection portion 51, and the elastic connection sheets 532 and the intermediate spring sheet 531 are all opposite to the clearance opening 52 in the winding axial direction.

One end of the elastic connection sheet 532 is connected to the intermediate spring sheet 531, and the other end of the elastic connection sheet 532 extends in the direction away from the center of the current collector plate 50 and is connected to the tab connection portion 51, for example, the intermediate spring sheet 531 may be connected to a terminal post of the cylindrical battery. In a discharging process of the cylindrical battery, a current is transmitted, through the first tab group 32, to the tab connection portion 51 of the current collector plate 50 electrically connected thereto, then is transmitted, from the tab connection portion 51, to the end of the elastic connection sheet 532 of the current collector plate 50 that is connected to the tab connection portion 51, then is transmitted to the other end of the elastic connection sheet 532 and transmitted to the intermediate spring sheet 531 connected thereto, and finally transmitted to the terminal post of the cylindrical battery through the intermediate spring sheet 531, to complete the discharging process of the cylindrical battery.

In a charging process of the cylindrical battery, an external current is transmitted, through the post of the cylindrical battery, to the intermediate spring sheet 531 of the flexible buffer portion 53 and one end of the elastic connection sheet 532 connected to the intermediate spring sheet 531, then is transmitted to the other end of the elastic connection sheet 532 that is connected to the tab connection portion 51, then is transmitted to the tab connection portion 51 of the current collector plate 50, and finally is transmitted, through the tab connection portion 51, to the first tab group 32 electrically connected thereto, to complete the charging process of the cylindrical battery.

In the winding axial direction, the elastic connection sheets 532 and the intermediate spring sheet 531 are all opposite to the clearance opening 52, and the clearance opening 52 can provide a space for deformation of the elastic connection sheets 532 and the intermediate spring sheet 531, and can ensure the venting and wetting effects of the clearance opening 52.

For example, referring to FIG. 6, the flexible buffer portion 53 includes an intermediate spring sheet 531 and four elastic connection sheets 532 spaced apart in the circumferential direction of the current collector plate 50, and in the winding axial direction, the four elastic connection sheets 532 and the intermediate spring sheet 531 are all opposite to the clearance opening 52.

Referring to FIG. 8 to FIG. 9, according to some embodiments of this application, a width of the elastic connection sheet 532 ranges from 4 mm to 10 mm in a circumferential direction of the current collector plate 50. For example, the width of the elastic connection sheet 532 in the circumferential direction of the current collector plate 50 may be 4 mm, 6 mm, 8 mm, or 10 mm. If the width of the elastic connection sheet 532 in the circumferential direction of the current collector plate 50 is less than 4 mm, the width of the elastic connection sheet 532 in the circumferential direction of the current collector plate 50 is small, and an area of the elastic connection sheet 532 is small. In this case, a current flowing capability of the elastic connection sheet 532 is poor, and the charging/discharging performance of the cylindrical battery is affected. If the width of the elastic connection sheet 532 in the circumferential direction of the current collector plate 50 is greater than 10 mm, the width of the elastic connection sheet 532 in the circumferential direction of the current collector plate 50 is large, and an area of the tab connection portion 51 of the current collector plate 50 is small. In this case, a connection area between the current collector plate 50 and the first tab group 32 is small, resulting in a poor current flowing capability of the tab portion 40.

The width of the elastic connection sheet 532 in the circumferential direction of the current collector plate 50 is set to 4 mm to 10 mm, to ensure that both the tab portion 40 and the elastic connection sheet 532 have high current flowing capabilities, thereby ensuring charging/discharging performance of the cylindrical battery.

Referring to FIG. 8 to FIG. 9, according to some embodiments of this application, the clearance opening 52 includes an intermediate opening region 521 and a plurality of branch opening regions 522 in communication with the intermediate opening region 521, and the plurality of branch opening regions 522 are located on a peripheral side of the intermediate opening region 521 and spaced apart in the circumferential direction of the current collector plate 50. The intermediate opening region 521 and the plurality of spaced branch opening regions 522 in communication with the intermediate opening region 521 are provided, so that the intermediate opening region 521 can provide a space for deformation of the intermediate spring sheet 531, and the branch opening regions 522 can provide spaces for deformation of corresponding elastic connection sheets 532. In addition, the plurality of spaced branch opening regions 522 in communication with the intermediate opening region 521 can implement more uniform venting and wetting effects of the clearance opening 52.

In the winding axial direction, the intermediate spring sheet 531 is opposite to the intermediate opening region 521, and the elastic connection sheets 532 are opposite to the branch opening regions 522. The intermediate spring sheet 531 and the elastic connection sheets 532 are respectively opposite to the intermediate opening region 521 and the branch opening regions 522, so that a structure of the clearance opening 52 matches a structure of the flexible buffer portion 53, and the structure of the clearance opening 52 is more appropriate, thereby reducing space occupation of the clearance opening 52 to some extent. In this way, the tab connection portion 51 of the current collector plate 50 can have a large area for electrical connection to the first tab group 32, to ensure that the tab portion 40 has a high current flowing capability.

The tab connection portion 51 includes a plurality of tab connection sub-portions 511 spaced apart in the circumferential direction of the current collector plate 50, and the branch opening region 522 is located between adjacent tab connection sub-portions 511. The plurality of tab connection sub-portions 511 are spaced apart in the circumferential direction of the current collector plate 50, and the plurality of tab connection sub-portions 511 are all electrically connected to the first tab groups 32, so that distribution of the tab connection sub-portions 511 can be regionalized and rationalized, thereby facilitating connection between the tab connection portion 51 and the current collector plate 50. In this way, connection positions between the tab connection portion 51 and the first tab groups 32 are uniform and appropriate, thereby ensuring a connection effect between the tab connection portion 51 and the first tab groups 32. A quantity of tab connection sub-portions 511 is the same as a quantity of branch opening regions 522.

For example, referring to FIG. 8, the clearance opening 52 includes an intermediate opening region 521 and four branch opening regions 522 in communication with the intermediate opening region 521, and the four branch opening regions 522 are located on a peripheral side of the intermediate opening region 521 and spaced apart in the circumferential direction of the current collector plate 50. The tab connection portion 51 includes four tab connection sub-portions 511 spaced apart in the circumferential direction of the current collector plate 50.

Referring to FIG. 8 to FIG. 9, according to some embodiments of this application, a spacing between a radial outer edge of the branch opening region 522 and an outer edge of the current collector plate 50 ranges from 3 mm to 12 mm. For example, the spacing between the radial outer edge of the branch opening region 522 and the outer edge of the current collector plate 50 may be 3 mm, 6 mm, 9 mm, or 12 mm. If the spacing between the radial outer edge of the branch opening region 522 and the outer edge of the current collector plate 50 is less than 3 mm, the spacing between the radial outer edge of the branch opening region 522 and the outer edge of the current collector plate 50 is small. In this case, space occupation of the branch opening region 522 is large, and the area of the tab connection portion 51 is small, resulting in a poor current flowing capability of the tab portion 40. If the spacing between the radial outer edge of the branch opening region 522 and the outer edge of the current collector plate 50 is greater than 12 mm, the spacing between the radial outer edge of the branch opening region 522 and the outer edge of the current collector plate 50 is large. In this case, the area of the clearance opening 52 is small, which affects a buffering effect of the flexible buffer portion 53, and affects the venting and wetting effects of the clearance opening 52.

The spacing between the radial outer edge of the branch opening region 522 and the outer edge of the current collector plate 50 is set to 3 mm to 12 mm, to ensure that the tab region 30 has a high current flowing capability, and ensure the buffering effect of the flexible buffer portion 53 and the venting and wetting effects.

Referring to FIG. 8 to FIG. 9, according to some embodiments of this application, in the winding axial direction, at least a part of the branch opening region 522 is opposite to a region between two adjacent first tab groups 32, that is, a part of the branch opening region 522 is opposite to a region between two adjacent first tab groups 32 or the entire branch opening region is opposite to a region between two adjacent first tab groups 32.

Because at least a part of the branch opening region 522 is opposite to the region between the two adjacent first tab groups 32, the tab connection sub-portion 511 located between two adjacent branch opening regions 522 can be opposite to the first tab group 32, and the first tab group 32 has a large area. It can be ensured that the tab portion 40 has a high current flowing capability, and the tab connection portion 51 can have a large area for electrical connection to the first tab group 32, thereby facilitating electrical connection between the tab connection sub-portion 511 and the first tab group 32. For example, when the first tab group 32 is electrically connected to the tab connection sub-portion 511 through welding, the first tab group 32 has a flat surface and has a large area, which can facilitate a welding operation and ensure welding quality.

Referring to FIG. 8 to FIG. 9, according to some embodiments of this application, the flexible buffer portion 53 is formed by stamping a part of the current collector plate 50. The flexible buffer portion 53 formed by stamping the part of the current collector plate 50 has advantages of high precision, good quality, a flat surface, and easy batch production, so that a processing process can be simplified to some extent, thereby improving processing and formation efficiency of the flexible buffer portion 53.

Referring to FIG. 1 to FIG. 9, according to a second aspect of this application, an embodiment provides a cylindrical battery, including the battery cell 100 according to the embodiment in the first aspect of this application. In a process of preparing the cylindrical battery, the battery cell 100 is assembled with and connected to a battery housing to form the cylindrical battery.

In the cylindrical battery according to this embodiment of this application, the battery cell 100 is provided, so that in a process of forming the tab portion 40 through bending and flattening, metal shavings can be prevented from being generated due to collision and compression, thereby reducing a short-circuit risk in the process of bending and flattening to form the tab portion 40.

Referring to FIG. 1 to FIG. 9, according to a third aspect of this application, an embodiment provides an electrical device, including the cylindrical battery according to the embodiment in the second aspect of this application.

Optionally, the electrical device may be a vehicle, for example, the electrical device may be an electric vehicle.

In the electrical device according to this embodiment of this application, the cylindrical battery is provided, so that in a process of preparing the cylindrical battery and in a process of forming the tab portion 40 through bending and flattening, metal shavings can be prevented from being generated due to collision and compression, thereby reducing a short-circuit risk in the process of bending and flattening to form the tab portion.

In the description of this specification, descriptions referring to the terms such as "one embodiment", "some embodiments", "example embodiments", "examples", "specific examples", or "some examples" mean that specific features, structures, materials, or characteristics described with reference to this embodiment or example are included in at least one embodiment or example of this application. In this specification, illustrative expressions of the foregoing terms do not necessarily refer to the same embodiment or example. Furthermore, the described specific features, structures, materials, or characteristics may be combined in any one or more embodiments or examples in a suitable manner.

Although embodiments of this application have been shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. A battery cell (100), applied to a cylindrical battery, wherein the battery cell (100) comprises:
a wound battery cell body (10), comprising a first electrode plate (11), a second electrode plate (13), and a separator that are wound, wherein polarity of the first electrode plate (11) is opposite to polarity of the second electrode plate (13), the separator is provided between the first electrode plate (11) and the second electrode plate (13), the first electrode plate (11) and/or the second electrode plate (13) comprises an electrode plate body (20) and an active substance layer (25), the electrode plate body (20) comprises a coating region (23) and a bare foil region (24) connected to a side of the coating region (23) in a winding axial direction, the active substance layer (25) is covered on the coating region (23), at least a part of the bare foil region (24) is suitable for being bent into a tab portion (40), and the tab portion (40) comprises a plurality of first tab groups (32) spaced apart in a winding circumferential direction.

2. The battery cell (100) according to claim 1, wherein there are 5 to 16 first tab groups (32).

3. The battery cell (100) according to claim 1 or 2, wherein a spacing between adjacent first tab groups (32) ranges from 0.5 mm to 8 mm.

4. The battery cell (100) according to any one of claims 1 to 3, wherein a spacing groove (33) is formed between adjacent first tab groups (32).

5. The battery cell (100) according to any one of claims 1 to 4, wherein two opposite edges of the first tab group (32) in the winding circumferential direction are respectively a third edge and a fourth edge, an extension line of the third edge and an extension line of the fourth edge are provided at an angle, and the angle ranges from 22.5° to 80°.

6. The battery cell (100) according to claim 1, wherein the tab portion (40) comprises a plurality of second tab groups (34) spaced apart in the winding circumferential direction, the second tab groups (34) and the first tab groups (32) are alternately arranged in the winding circumferential direction, and a bending gap (35) is formed between adjacent second tab group (34) and first tab group (32).

7. The battery cell (100) according to claim 6, wherein a circumferential size of the second tab group (34) is greater than a circumferential size of the bending gap (35) on a same winding turn.

8. The battery cell (100) according to claim 6 or 7, wherein on the same winding turn, two opposite edges of the second tab group (34) in the winding circumferential direction of the battery cell (100) are respectively a fifth edge and a sixth edge, and an extension line of the fifth edge and an extension line of the sixth edge are provided in parallel or at an angle.

9. The battery cell (100) according to any one of claims 6 to 8, wherein at least one end of the first tab group (32) in the winding circumferential direction is provided on a side of an adjacent second tab group (34) that is away from the coating region (23).

10. The battery cell (100) according to any one of claims 1 to 9, wherein the bare foil region (24) comprises a buffer region (36) and a tab region (30), the buffer region (36) is connected between the tab region (30) and the coating region (23), there is a bending line (37) between the buffer region (36) and the tab region (30), and the tab region (30) is suitable for being bent along the bending line (37) to form the tab portion (40).

11. The battery cell (100) according to any one of claims 1 to 10, wherein a height of the bare foil region (24) ranges from 3 mm to 10 mm in the winding axial direction.

12. The battery cell (100) according to any one of claims 1 to 11, wherein a part of the bare foil region (24) that is close to a winding axis is formed with a clearance notch (38), the clearance notch (38) forms a tab-free region (39), and at least a part of the bare foil region (24) is bent toward the winding axis to form the tab portion (40).

13. The battery cell (100) according to any one of claims 1 to 12, wherein the battery cell (100) further comprises a current collector plate (50), the current collector plate (50) is provided on a side of the tab portion (40) that is away from the coating region (23), and the current collector plate (50) is electrically connected to the first tab groups (32).

14. The battery cell (100) according to claim 13, wherein the current collector plate (50) comprises a tab connection portion (51) and a flexible buffer portion (53), the tab connection portion (51) is electrically connected to the first tab groups (32), and the flexible buffer portion (53) is capable of deforming in the winding axial direction.

15. The battery cell (100) according to claim 14, wherein a clearance opening (52) is formed on the current collector plate (50), and at least a part of the flexible buffer portion (53) is opposite to the clearance opening (52) in the winding axial direction.

16. The battery cell (100) according to claim 15, wherein the flexible buffer portion (53) comprises an intermediate spring sheet (531) and a plurality of elastic connection sheets (532) spaced apart in a circumferential direction of the current collector plate (50), the intermediate spring sheet (531) is located in a middle of the current collector plate (50), one end of the elastic connection sheet (532) is connected to the intermediate spring sheet (531), the other end of the elastic connection sheet (532) extends in a direction away from a center of the current collector plate (50) and is connected to the tab connection portion (51), and the elastic connection sheets (532) and the intermediate spring sheet (531) are all opposite to the clearance opening (52) in the winding axial direction.

17. The battery cell (100) according to claim 16, wherein a width of the elastic connection sheet (532) ranges from 4 mm to 10 mm in the circumferential direction of the current collector plate (50).

18. The battery cell (100) according to claim 16, wherein the clearance opening (52) comprises an intermediate opening region (521) and a plurality of branch opening regions (522) in communication with the intermediate opening region (521), and the plurality of branch opening regions (522) are located on a peripheral side of the intermediate opening region (521) and are spaced apart in the circumferential direction of the current collector plate (50); and
in the winding axial direction, the intermediate spring sheet (531) is opposite to the intermediate opening region (521), the elastic connection sheets (532) are opposite to the branch opening regions (522), the tab connection portion (51) comprises a plurality of tab connection sub-portions (511) spaced apart in the circumferential direction of the current collector plate (50), and the branch opening region (522) is located between adjacent tab connection sub-portions (511).

19. The battery cell (100) according to claim 18, wherein a spacing between a radial outer edge of the branch opening region (522) and an outer edge of the current collector plate (50) ranges from 3 mm to 12 mm.

20. The battery cell (100) according to claim 18 or 19, wherein at least a part of the branch opening region (522) is opposite to a region between two adjacent first tab groups (32) in the winding axial direction.

21. A cylindrical battery, comprising the battery cell (100) according to any one of claims 1 to 20.

22. An electrical device, comprising the cylindrical battery according to claim 21.
